# EUROPEAN PATENT APPLICATION

(11) **EP 2 091 099 A1**
(43) Date of publication of application: **19.08.2009**
(21) Application number: 07831004.2
(22) Date of filing: 25.10.2007
(51) Int. Cl.: H01M 4/52, H01M 4/02, H01M 10/36, H01M 10/40

(54) **LITHIUM SECONDARY BATTERY**

(30) Priority: 25.10.2006 JP 2006289740
(71) Applicant: Sumitomo Chemical Company, Limited, Tokyo 104-8260 (JP)
(72) Inventor: KAWAKAMI, Yoshihiro, Niihama-shi, Ehime (JP)
(74) Representative: Hart-Davis, Jason
(86) International application number: PCT/JP2007/071270
(87) International publication number: WO 2008/050903

(57) **Abstract**

The present invention provides a lithium secondary battery having a positive electrode, a negative electrode, and a solid electrolyte and **characterized in that** the positive electrode contains positive electrode active material particles made of particles of a material capable of doping/dedoping lithium ion and an element M-containing compound (herein, the element M-containing compound is a compound containing one or more elements selected from B, Al, Mg, Co, Cr, Mn, and Fe as the element M) disposed on the surfaces of the particles as particles or in a layered state.

## Description

### TECHNICAL FIELD

The present invention relates to a lithium secondary battery. More specifically, the present invention relates to a lithium secondary battery having a solid electrolyte.

### BACKGROUND ART

Lithium secondary batteries have already come into practical use as power sources for mobile phones, notebook personal computers, and so forth, and further, it has been tried to use also for middle and large scale applications such as vehicular applications and power storage applications. Further, among the lithium secondary batteries, lithium secondary batteries having solid electrolytes (hereinafter, referred to also as solid electrolytic lithium secondary batteries) have drawn attention in terms of the safety.

As conventional solid electrolytic lithium secondary batteries, Japanese Patent Application Laid-Open (JP-A) No. 2001-52733 discloses a lithium secondary battery using a lithium ion conductive inorganic solid electrolyte mainly containing a sulfide as a solid electrolyte and a positive electrode active material containing a lithium chloride carried on the surface of a lithium-containing transition metal oxide as a positive electrode.

### DISCLOSURE OF THE INVENTION

However, with respect to the above-mentioned conventional solid electrolytic lithium secondary batteries, although the capacities of the initial period are improved, the cycle properties of maintaining the capacities as much as possible are not necessarily made sufficient in the case of repeating charge and discharge. An object of the present invention is to provide a solid electrolytic lithium secondary battery capable of providing a high cycle property as compared with conventional solid electrolytic lithium secondary batteries.

The inventors of the present invention have made intensive investigations to solve the above-mentioned problems and have completed the present invention.

That is, the present invention provides the following inventions.
<1> A lithium secondary battery having a positive electrode, a negative electrode, and a solid electrolyte, wherein the positive electrode contains positive electrode active material particles made of particles of a material capable of doping/dedoping a lithium ion and an element M-containing compound disposed on the surfaces of the particles as reticles or in a layered state (herein, the element 14-containing compound is a compound containing one or more elements selected from B, Al, Mg, Co, Cr, Mn and Fe as the element M, and is a compound of at least one selected from an oxide, hydroxide, oxyhydroxide and carbonate).
<2> The lithium secondary battery according to <1>, wherein the element M is Al.
<3> The lithium secondary battery according to <1> or <2>, wherein the material capable of doping/dedoping a lithium ion is a composite oxide containing lithium and nickel.
<4> The lithium secondary battery according to one of <1> to <3>, wherein the positive electrode further contains solid electrolyte particles.
<5> The lithium secondary battery according to <4> further having a sheet-form solid electrolyte.

The lithium secondary battery of the present invention is capable of having a high cycle property without decreasing an initial capacity as compared with conventional solid electrolytic lithium secondary batteries and the present invention is remarkably industrially useful.

### BEST MODE FOR CARRYING OUT THE INVENTION

The present invention provides a lithium secondary battery having a positive electrode, a negative electrode, and a solid electrolyte, wherein the positive electrode contains positive electrode active material particles made of particles of a material capable of doping/dedoping lithium ion and an element M-containing compound (herein, the element M-containing compound is a compound containing one or more elements selected from B, Al, Mg, Co, Cr, Mn, and Fe as the element M) disposed on the surfaces of the particles as particles or in a layered state. In a positive electrode of the above-mentioned conventional technique, a positive electrode active material containing a lithium chloride deposited on the surface of a lithium-containing transition metal oxide is used, and since excessive lithium ions exist on the surface of the lithium-containing transition metal oxide, the increase of the inner resistance of the positive electrode is induced along with cycle numbers and the cycle property thus becomes insufficient; on the other hand, in the present invention, the element M-containing compound is dospoed on the surfaces of particles of a material capable of doping/dedoping a lithium ion as particles or in a layered state and thus it is supposed that existence of excess lithium ions can be suppressed, the inner resistance of the positive electrode can be lowered, and the cycle property of the lithium secondary battery can be improved.

In the present invention, examples of the material capable of doping/dedoping a lithium ion (hereinafter, referred to also as a core material in some cases) may be lithium-containing materials, which are oxides or sulfides, and practically composite oxides containing lithium and cobalt as typically represented by LiCoO₂; composite oxides containing lithium and nickel as typically represented by LiNiO₂; LiMn₂O₄, LiNiVO₄, LiMn_{1.5}Ni_{0.5}O₄, Li(Mn, Co)O₂, LiCoPO₄, LiFePO₄, LiTiS₂, LiMoS₂, LiMo₆S₈, and so forth, and examples may also include compounds obtained by substituting partially the transition metal elements of these oxides or sulfides with different elements.

From the viewpoint of improving an initial capacity of the lithium secondary battery, the core material is preferably a composite oxide containing lithium and nickel. Examples of the composite oxide containing lithium and nickel may include specifically composite oxides represented by the following general formula (1) or (2): Li ₓNi_{1-y}M¹_{y}O₂ (1)
(wherein x and y are 0.9 ≦ x ≦ 1.2 and 0 ≦ y ≦ 0.5, respectively; and M¹ denotes one or more elements selected from B, Al, Ga, In, Si, Ge, Sn, Mg, and transition metal elements).

In terms of further improvement of the initial capacity of the lithium secondary battery, M¹ in the formula (1) preferably denotes one or more elements selected from B, Al, Mg, Co, Cr, Mn and Fe, and also y in the formula (1) is preferably a value in the range of 0.001 or higher and 0.4 or lower and more preferably a value in the range of 0.01 or higher and 0.3 or lower, Li ₓNi_{1-z}M²_{z}O₂ (2)
(wherein x and z are 0.9 ≦ x ≦ 1.2 and 0.3≦z ≦ 0.9, respectively; and M² denotes two or more elements selected from B, Al, Si, Sn, Mg, Mn, Fe, and Co).

In terms of further improvement of the initial capacity of the lithium secondary battery, z in the formula (2) is preferably a value in the range of 0.4 or higher and 0.8 or lower and more preferably a value in the range of 0.5 or higher and 0.7 or lower; and M² preferably denotes two or more elements selected from B, Al, Mn, Fe, and Co, more preferably two or more elements selected from B, Mn, Fe and Co, and even more preferably two or more elements selected from Mn, Fe and Co.

The element M-containing compound in the present invention may be a compound different from the core material in the present invention and examples include compounds which do not store energy in a lithium secondary battery by themselves such as compounds containing no lithium or compounds incapable of doping/dedoping a lithium ion although containing lithium. In the element M-containing compound, the element M is preferably Al in terms of the cycle property and safety of the battery. In the case where the element M is Al, examples of Al-containing compounds as the element M-containing compound may be alumina and may be compounds containing Li and Al. Examples of compounds containing Li and Al may include LiAlO₂. The element M-containing compound may be a compound different from the core material and compounds incapable of doping/dedoping a lithium ion such as LiAlO₂ are preferable embodiments from a viewpoint of enhancing the cycle property of a lithium secondary battery to be obtained.

In the present invention, the element M-containing compound (B) is disposed on the surfaces of the particles of the core material (A) as particles or in a layered state, that is, (B) adheres to the surfaces of the particles (A) as particles or in a layered state. This adhesion may be chemical bond or physical adsorption of (A) and (B). Further, (B) may adhere partially to the surfaces of the particles of (A). As particles, (B) may adhere to the surfaces of the particles of (A) or as particles or in a layered state, (B) may cover the surfaces of the particles of (A). It is preferable that (B) covers entire surfaces of the particles of (A). In the case where (B) covers the surfaces of the particles of (A) as particles or in a layered state, the thickness of the coating is preferably 1 nm to 500 nm and more preferably 1 nm to 100 nm.

In the present invention, in the case where the element M-containing compound is in a particle state, to more efficiently cover the surfaces of the particles of the core material, finer particles than the particles of the core material are preferable and a BET specific surface area of the element M-containing compound is preferably at least 5 times as large as the BET specific surface area of the core material and more preferably at least 20 times as large. Furthermore, even if the element M-containing compound is not in a particle form, the element M-containing compound can be disposed in the layered state on the surfaces of the particles of the core material by employing a technique such as sputtering or the like.

Next, a method for producing the positive electrode active material particles of the present invention will be described.

At first, the core material of the positive electrode active material particles can be produced by calcinating a metal compound mixture to be the core material by calcination. That is, compounds containing corresponding metal elements are weighed to give a prescribed composition and mixed and the obtained metal compound mixture is calcined to produce the core material. For example, a composite oxide expressed by the following one of preferable compositions, Li_{1.11}[Ni_{0.36}Mn_{0.43}Co_{0.21}]O₂, can be obtained by weighing lithium hydroxide, dinickel trioxide, manganese carbonate, and cobalt oxide in a manner that the mole ratio of Li : Ni : Mn : Co is adjusted to be 1.11 : 0.36 : 0.43 : 0.21 and calcining the metal compound mixture obtained after mixing them.

As the above-mentioned compounds containing metal elements, for example, oxides are used, or substances which could become oxides by decomposition and/or oxidization at a high temperature such as hydroxides, oxyhydroxides, carbonates, nitrates, acetates, halides, oxalates, alkoxides, sulfides, or the like can be used. Among them, compounds containing Li are preferably hydroxides and/or carbonates; compounds containing Ni are preferably hydroxides and/or oxides; compounds containing Mn are preferably carbonates and/or oxides; compounds containing Co are preferably oxides and/or hydroxides. Further, composite compounds containing two or more above-mentioned corresponding metal elements may also be used.

Further, in order to improve crystallinity of the core material, the above-mentioned metal compound mixture before calcining may also contain a boron-containing compound. A content of the boron-containing compound may be generally 0.00001% by mole or more and 5% by mole or less in terms of boron based on the total mole of the metal elements excluding lithium in the metal compound mixture. It is more preferably 0.0001% by mole or more and 3% by mole or less in terms of boron. Examples of the boron-containing compound include boron oxide, boric acid, and the like, and preferably boric acid. Herein, boron further added to the metal compound mixture may remain the core material after calcining or may be removed by washing or evaporation.

The mixing of the metal element-containing compounds may be carried out either dry mixing or wet mixing; however, dry mixing which is simpler is preferable and as a dry mixing apparatus, a V-type mixing apparatus, a W-type mixing apparatus, a ribbon mixing apparatus, a drum mixer, a dry ball mill, or the like may be used for the mixing.

In terms of promoting a solid-phase reaction at the time of calcining, the average particle diameter of the metal compound mixture on the basis of volume is preferably a value in the range of 1 µm or higher and 20 µm or less. Herein, the average particle diameter of the metal compound mixture on the basis of volume is D50 value measured by a particle size distribution measurement apparatus employing a laser diffraction scattering method, that is, the average particle diameter is a particle diameter (D50) of 50% cumulative fine particles in the cumulative particle diameter distribution of the metal compound mixture on the basis of volume.

After molded by compression if necessary, the above-mentioned metal compound mixture is calcined by keeping the mixture in a temperature range of, for example, 600°C or higher and 1200°C or lower for 2 to 30 hours to obtain a calcined product. In calcination, a calcining container containing the metal compound mixture is preferable to be heated to the retention temperature quickly to an extent that the container is not broken. As an atmosphere for the calcining, in the case where the core material is an oxide, air, oxygen, nitrogen, argon, or a mixed gas thereof may be used, and an atmosphere containing oxygen is preferable. Further, in the case where the core material is a sulfide, the atmosphere may be an atmosphere containing sulfur such as hydrogen sulfide or the like. The atmosphere may contain air, oxygen, nitrogen, argon, or a mixed gas thereof.

The above-mentioned calcined product may be pulverized based on the necessity by using a pulverizing apparatus such as a vibration mill, a jet mill, a dry type ball mill, or the like to thereby obtain a core material. In the case of a jet mill, pulverization is carried out by accelerating particles composing the calcined product and causing collision between particles to lessen the strain of crystal structure due to collision and perform the pulverization easily within a short time, so that generation of particles other than aimed ones of the present invention can be suppressed. In place of the jet mill, a vibration mill or a dry type ball mill may be used for the pulverization, and in this time, the process may sometime become complicated, for example, the air blow classification is required. Further, as the jet mill, a fluidized bed type jet mill in which a classifier is disposed is preferable to be used. As the jet mill, Counter Jet Mill (trade name, manufactured by Hosokawa Micron Co., Ltd.) may be exemplified.

The core material to be produced in the above-mentioned manner is composed of particles. Next, a method of producing the positive electrode active material particles of the present invention by using the core material and putting the element M-containing compound on the surfaces of the particles of the core material will be described. The positive electrode active material particles of the present invention can be produced using the core material and the element M-containing compound by dry mixing. The dry mixing method is not particularly limited; however, as a simple method, a method for loading respectively prescribed amounts of the core material and the element M-containing compound to a container and shaking and mixing them can be exemplified. Further, an apparatus conventionally used in industrial spheres such as a V-type, a W-type, and a double conical type mixers as well as powder mixing containers having screws and stirring blades, a ball mill, and a vibration mill may be employed to carry out the method.

With respect to the use amount of the element M-containing compound, although depending on the BET specific surface area of the core material, in the case the core material is a composite oxide containing lithium and nickel, the element M amount is preferably set at 0.005 to 0.15 ml to 1 mol of the core material in terms of the further improvement of the cycle property of the lithium secondary battery of the present invention and it is more preferably set at the element M amount to be 0.01 to 0.10 ml to 1 mol of the core material.

Further, in the dry mixing, if the mixing is insufficient, the cycle property of the lithium secondary battery of the present invention may sometimes be lowered, and therefore, it is preferable to carry out mixing to the extent that agglomerates of the element M-containing compound cannot be visually observed. If a medium is used in the mixing process for the dry mixing, mixing efficiency is improved and the element M-containing compound can firmly be stuck to the particle surfaces of the core material and thus it tends to be easy to provide a lithium secondary battery more excellent in the cycle property and a power property.

The positive electrode active material particles produced in the above-mentioned manner are held in atmosphere containing water to firmly stick the element M-containing compound to the particle surfaces of the core material. The method for the holding may be, for example, a method for filling a container with the positive electrode active material particles and holding the container in a temperature adjusted and humidity adjusted atmosphere. In this case, the weight increase ratio of the positive electrode active material particles is controlled preferably in the range of 0.1% by weight or more and 5.0% by weight or less and more preferably in the range of 0.3% by weight or more and 3.0% by weight or less. A measurement method of the weight increase ratio is not particularly limited; however the weight increase ratio of the positive electrode active material particles can be calculated by measuring the weight of the container before the positive electrode active material particles are packed in the container, filling the container with a prescribed amount of the positive electrode active material particles, and measuring the total weight before and after the total weight in the atmosphere.

If the temperature is in the range of 20°C or higher and 90°C or lower and the relative humidity is in the range of 20% or higher and 90% or lower in the case the positive electrode active material particles are stored in the water-containing atmosphere, it tends to provide a lithium secondary battery with more excellent cycle property and power property and further the weight control ratio can be controlled easily, thus being preferable. It is more preferable that the temperature is in the range of 30°C or higher and 70°C or lower and the relative humidity is in the range of 50% or higher and 80% or lower. Further, during the retention, supply of carbonic acid gas to the system is preferable in terms of the shortening of the retention time. Particularly, if the carbonic acid gas quantity is controlled to be 0.05 to 50 mg/h/(g - positive electrode active material particles), the weight increase ratio achievement time can be shortened and the weight increase ratio control can be made relatively easy and thus it is preferable. In this case, as a carbonic acid gas supply method, a gas containing carbonic acid gas may continuously be supplied during the retention or carbonic acid gas may previously be introduced before the retention. Example of the gas containing carbonic acid gas may be pure carbonic acid gas and besides gases obtained by diluting carbonic acid gas with air, nitrogen, oxygen, inert gas such as argon, and their gas mixture. Further, if the carbonic acid gas amount exceeds 50 mg/h/(g - positive electrode active material particles), the time to increase the weight increase ratio to a prescribed ratio becomes so short that the weight increase ratio control may tend to be difficult. A preferable embodiment is that the carbonic acid amount is 0.1 to 10 mg/h/(g - positive electrode active material particles).

Further, the positive electrode active material particles may be calcined after the retention. The calcining condition is preferably 600°C or higher calcining temperature and 30 minutes or longer calcining time. Herein, the calcining temperature and time mean the highest achievement temperature and the retention time at the highest achievement temperature, respectively, in the temperature increasing program and in the case of the temperature, if the programmed temperature and the actual temperature are different, the temperature is defined by conversion into the actual temperature. Further, herein, the calcining is not particularly limited if the temperature and the retention time do not cause any practical change of the crystal structure of the particles of the core material. At that time, the case either the temperature or the retention time in the calcining is within the range of the temperature or the retention time in the calcining step of the core material production is preferable since a lithium secondary battery excellent in the balance among the initial capacity, the cycle property, and the power property tends to be provided. Further, the atmosphere for calcining may be atmospheric air as well as oxygen, nitrogen, carbon dioxide, steam, nitrogen oxide, hydrogen sulfide, or gas mixture thereof or in reduced pressure and at the time of calcining materials such as lithium nickel oxide which require high concentration oxygen atmosphere, it is preferable to carry out calcining in atmosphere with 90% by volume of an oxygen concentration so as not to degrade the crystallinity of the core material. Further, in the parts where the element M-containing compound and the core material are brought into contact with each other, even if the element M-containing compound and the core material are partially reacted by calcining after the retention, it does not mean any change of the deposition of the element M-containing compound on the surfaces of the particles of the core material.

Further, if the BET specific surface area of the powder of the positive electrode active material particles obtained after the calcining is 0.7 times or more and 2 time or more of the BET specific surface area of the core material, it is preferable since a lithium secondary battery excellent in the cycle property and the power property can be provided and it is preferably 0.8 times or more and 2 time or less.

Next, a production example of the lithium secondary battery of the present invention will be described. The lithium secondary battery of the present invention has a positive electrode, a negative electrode, and a solid electrolyte. An example of the positive electrode includes a positive electrode composed of a positive composite and a positive electrode current collector, and an example of the negative electrode include a negative electrode composed of a negative composite and a negative electrode current collector.

Examples of the positive composite may include those containing the powder of the positive electrode active material particles obtained in the above-mentioned manner, a carbonaceous material as a conductive material, and a thermoplastic resin as a binder. Examples of the carbonaceous material may be natural graphite, artificial graphite, cokes, and carbon black and those with spherical shapes may be used. As the carbonaceous material, the above-mentioned exemplified carbonaceous materials may be used alone or in form of mixtures. For example, artificial graphite and carbon black may be used while being mixed. In terms of decrease of the resistance of the positive electrode, a solid electrolyte having lithium ion conductivity may be added in an amount of about 1 to 70 parts by weight based on 100 parts by weight of the positive composite besides the above-mentioned conductive agent in the positive composite.

Examples of the thermoplastic resin may include polyvinylidene fluoride (hereinafter, referred to also as PVDF), polytetrafluoroethylene (hereinafter, referred to also as PTFE), tetrafluoroethylene-hexafluoropropylene-vinylidene fluoride type copolymers, hexafluoropropylene-vinylidene fluoride type copolymers, tetrafluoroethylene-perfluorovinyl ether type copolymers, and the like. They may be used alone or two or more thereof may be used in form of mixtures. These binders may be used while being dissolved in organic solvents in which the binders are soluble, e.g., 1-methyl-2-pyrrolidone (hereinafter, referred to also as NMP).

Further, as the binder, if a fluororesin and a polyolefin resin are used in combination so as to have a ratio of the fluororesin of 1 to 10% by weight and a ratio of the polyolefin resin of 0.1 to 2% by weight in the positive composite, the bonding property to the current collector sometimes become excellent and thus it is preferable.

As the positive electrode current collector, Al, Ni, and a stainless steel may be used and Al is preferable since it is easy to be processed into a thin film and inexpensive. A method for depositing the positive composite may be a method of press molding and a method of obtaining a paste using a solvent or the like, applying the paste to the current collector, and pressing the resulting current collector after drying.

Examples to be used as the negative electrode material of the lithium secondary battery of the present invention may be lithium metal, lithium alloys, and materials capable doping/dedoping lithium ion. Examples of the materials capable doping/dedoping lithium ion may be natural graphite, artificial graphite, coke, carbon black, thermally decomposable carbons, carbon fibers, carbonaceous materials of organic polymer-calcined bodies; and chalcogen compounds such as oxides and sulfides capable doping/dedoping lithium ion at lower potential than that of the positive electrode. As the carbonaceous material, carbonaceous materials containing graphite materials such as natural graphite, artificial graphite, and the like as a main component are preferable from a viewpoint of obtaining a lithium secondary battery with high energy density since they have high potential flatness and low average discharge potential in the case of combination use of them with the positive electrode.

The shape of the carbonaceous material may be, for example, flaky just like natural graphite, spherical just like meso-carbon micro-beads, fibrous just like graphitized carbon fibers, or agglomerates of fine powders and based on the necessity, a thermoplastic resin may be added as a binder. Example of the thermoplastic resin may be PVDF, polyethylene, polypropylene and the like.

The chalcogen compounds such as oxides, sulfides, and the like to be used as a negative electrode material may be crystalline or amorphous oxides containing Groups XIII, XIV, and XV element in a periodic table, such as amorous compound containing mainly a tin compound. With respect to these compounds, based on the necessity, a carbonaceous material as a conductive material and a thermoplastic resin as a binder may beaded.

As the negative electrolyte current collector, Cu, Ni, stainless etc. can be used, and Cu is preferable from the viewpoints that particularly in a lithium secondary battery, Cu hardly makes an alloy with lithium and is easily processed into a thin film. As a method for carrying the positive composite containing a positive electrode material on the negative electrode current collector, examples thereof include a method of press molding and a method of obtaining a paste using a solvent or the like, applying the paste to the current collector, and pressing the resulting current collector after drying. In addition, to decrease resistance in the electrode, a solid electrolyte having lithium ion conductivity may be mixed in an amount of about 1 to 70 parts by weight based on 100 parts by weight of a composite containing a negative electrode material.

Examples of the solid electrolyte to be used in the present invention may be polymer solid electrolytes obtained by mixing polyethylene oxide type polymer compounds or polymer compounds having polyorganosiloxane chains or polyoxyalkylene chains with one or more kinds of lithium salts such as LiClO₄, LiPF₆, LiBF₄, LiCF₃SO₃, LiN(CF₃SO₂)₂, and LiC(CF₃SO₂)₃ as well as lower aliphatic carboxylic acid lithium salts, LiAlCl₄, and LiB(C₂O₄)₂ as electrolytes.

Further, in the present invention, gel-like electrolytes obtained by making the above-mentioned polymer compounds retain nonaqueous electrolyte solutions are also regarded as the solid electrolyte. For the nonaqueous electrolyte solutions to be retained in the gel-like electrolytes, those obtained by dissolving electrolytes dissolved in organic solvents are used. Examples of the electrolytes are one or more kinds of lithium salts such as LiClO₄, LiPF₆, LiBF₄, LiCF₃SO₃, LiN(CF₃SO₂)₂, and LiC(CF₃SO₂)₃ as well as lower aliphatic carboxylic acid lithium salts, LiAlCl₄, and LiB(C₂O₄)₂ and examples of the organic solvents are carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and γ-butyrolactone; nitriles such as acetonitrile and butyronitrile; amides such as N,N-dimethylformamide and N,N-dimethylacetamide; carbamates such as 3-methyl-2-oxazolidone; sulfur compounds such as sulfolane, dimethyl sulfoxide, and 1,3-propanesultone; and those obtained by introducing fluorine substituent groups into the above-mentioned organic solvents and generally two or more thereof may be mixed and used. Especially, carbonate-containing mixed solvents are preferable and mixed solvents containing cyclic carbonates and acyclic carbonates, and mixed solvents containing cyclic carbonates and ethers are more preferable. The mixed solvents containing cyclic carbonates and acyclic carbonates are preferably mixed solvents containing ethylene carbonate, dimethyl carbonate, and ethyl methyl carbonate in terms of the hardly decomposing property even if graphite materials such as natural graphite, artificial graphite or the like are used as the active material of the negative electrode.

In the case the gel-like electrolytes are used as the solid electrolyte, in terms of prevention of short-circuit between the positive electrode and the negative electrode, a separator may be used together. Examples to be used as the separator may be those made of fluororesin, an olefin resin such as polyethylene and polypropylene, nylon, and aromatic aramide and materials in form of porous films, nonwoven fabrics, woven fabrics, and the like may be used. The thickness of the separator is better to be thinner to an extent that the mechanical strength can be retained and generally about 5 to 100 µm since the volumetric energy density can be increased and the inner resistance of a battery can be lowered.

From the viewpoint of improvement of the safety of the lithium secondary battery, a solid electrolyte of an inorganic compound may be used. Examples of the solid electrolyte of an inorganic compound are sulfide glass such as Li₂S-SiS₂, Li₂S-GeS₂, Li₂S-P₂S₅, Li₂S-B₂S₃, and Li₂S-Al₂S₃; oxide glass such as SiO₂, Li₂O-GeO₂, Li₂O-P₂O₅, and Li₂O-B₂O₃; materials with improved lithium ion conductivity by adding lithium compounds such as lithium halides LiX (X = F, I, Cl, Br), Li₃PO₄, Li₂SO₄, Li₂O, Li₃BO₃, Li₂CO₃, Li₃N, Li₄SiO₄, and Li₂SiO₃ to these sulfide glasses or oxide glasses; and those with improved chemical stability by producing composites of the sulfide glass and oxide glass. Further, inorganic compound such as lanthanum-containing perovskite type oxides such as La_{0.5}1Li_{0.34}TiO_{2.94} and Li_{0.1}La_{0.3}NbO₃ and the like as well as LiTi(PO₄)₃, Li₁₄Zn(GeO₄)₄, Li₃N, Li_{3.6}Si_{0.6}P_{0.4}O₄, Li_{3.4}V_{0.6}Si_{0.4}O₄, Li₄GeS₄, Li₄SiS₄, LiPONₓ (herein, x exceeds 0 and not higher than 1) and the like can be used also as the solid electrolyte.

In the present invention, two or more of the above-mentioned polymer solid electrolytes, gel-like electrolytes, and the solid electrolytes of the inorganic compounds may be mixed or made to be a composite for use as the solid electrolyte.

The form of the lithium secondary battery of the present invention is not particularly limited and may be a paper type, a coin type, a cylindrical type, and a rectangular type one.

Further, as an outer casing, a hard case made of a metal and also having a function of a negative electrode or positive electrode terminal may not be used but a bag-like package made of an aluminum-containing laminate sheet may be used.

Hereinafter, the present invention will be described more practically with reference to Examples.

As the evaluation conditions of obtained batteries, the following two conditions may be employed for a charge/discharge test by charging at constant current and discharging at constant current to confirm the battery characteristics such as the cycle property. The following evaluation condition 1 is a technique for confirming the cycle property of a battery and the following evaluation condition 2 is a technique for confirming the power property of a battery, that is, a technique of confirming whether same capacity can be obtained in a large current discharge as that in a small current discharge.

### Evaluation 1

Charge cut-off voltage: 4.2 V
Charging current: 0.1 mA/cm²
Discharge cut-off voltage: 2.5 V
Discharging current: 0.1 mA/cm²
Charge/discharge cycles: 50 times

### Evaluation 2

At initial cycle
Charge cut-off voltage: 4.2 V
Charging current: 0.1 mA/cm²
Discharge cut-off voltage: 2.5 V
Discharging current: 0.1 mA/cm²
2nd to 6th cycles
Charge cut-off voltage: 4.2 V
Charging current: 0.1 mA/cm²
Discharge cut-off voltage: 2.5 V
Discharging current: 0.1 mA/cm² (at 2nd cycle), 0.5 mA/cm² (at 3rd cycle), 1 mA/cm² (at 4th cycle), 5 mA/cm² (at 5th cycle) and 10 mA/cm² (at 6th cycle).

### Production Example 1 (Production of positive electrode active material)

Lithium hydroxide (LiOH-H₂O; manufactured by The Honjo Chemical Corporation, pulverized product, average particle diameter 10 to 25 µm), nickel hydroxide (Ni(OH)₂; manufactured by Kansai Shokubai Kagaku Co., Ltd.; trade name Nickel Hydroxide No. 3), and cobalt oxide (Co₃O₄; manufactured by Seido Chemical Industry Co., Ltd.; trade name Cobalt Oxide (HCO)) were weighed so that an atomic ratio of respective metals was the following molar ratio, and mixed by a Loedige mixer (manufactured by Matsubo, M-20 model) to obtain a raw material powder mixture.
Li : Ni : Co = 1.05 : 0.85 : 0.15

The raw material powder mixture obtained in the above-mentioned manner was dried at 120°C for 10 hours and finely pulverized and mixed in the following condition by using a dynamic mill (manufactured by Mitsui Mining Co., Ltd.; MYD-5XA model).
Pulverization medium: 5 mmφ High alumina (6.1 kg)
Rotation speed of an agitator shaft: 650 rpm
Feeding amount of the dried raw material powder mixture: 12.0 kg/h

The pulverized powder obtained in the above-mentioned manner was packed in an alumina container and calcined at 730°C for 15 hours under an oxygen flow to obtain a bulky substance and this bulky substance was pulverized by a dry ball mill using 15 mmφ nylon-coated steel balls as a pulverization medium to an extent that the average particle diameter on the basis of volume became 5.5 µm (measured by laser diffraction type particle size distribution measurement apparatus SALD-1100 model (manufactured by Shimadzu Corporation) to obtain a core material C1 (BET specific surface area was 1.0 m²/g).

The above-mentioned core material C1 (900 g) and aluminum oxide (manufactured by Nippon Aerosil Co., Ltd; primary particle diameter 13 nm, BET specific surface area 113 m²/g, trade name Alumina C: set to give 0.08 mol of Al element to 37.4 g (C1 1 mole)) were loaded to a 5 L capacity pot made of polyethylene and using 4.2 kg of 15 mmφ nylon-coated steel balls as a medium, dry ball mill mixing was carried out at 80 rpm for 30 minutes and 720 g of the obtained powder was packed separately in four stainless trays (400 × 240 × 66 mmt) and the stainless trays were set in a constant temperature and constant humidity container (capacity 225 L) temperature- and humidity-conditioned at a temperature of 50°C and a relative humidity of 60%, and the powder was held in water-containing atmosphere. At that time, carbon dioxide was flowed at 19 ml/min (20°C) to the system. After retention for 3 hours, the stainless trays were taken out of the constant temperature and constant humidity container (at that time, the weight increase ratio of the powder was 1.5% by weight) and calcined at 725°C for 1 hour under an oxygen flow to obtain a powder S1 of positive electrode active material particles. Production Example 2 (Production of solid electrolyte)

In the case a solid electrolyte of an inorganic compound is used as a solid electrolyte, the solid electrolyte particles can be produced by the following method. That is, lithium phosphate (Li₃PO₄), lithium sulfide (Li₂S), and silicon sulfide (SiS₂) are weighed so as to have the following molar ratio, and sufficiently mixed to produce a raw material mixture. This raw material mixture is packed in a glassy carbon crucible and melted and reacted at 1000°C for 2 hours in an argon flow and the obtained melt is quenched using twin rollers to obtain glassy solid electrolyte (0.01Li₃PO₄-0.63Li₂S-0.36SiS₂) which was further pulverized to obtain a powder (E1) of solid electrolyte particles.

Li₃PO₄ : Li₂S : SiS₂ = 0.01 : 0.63 : 0.36

### Example 1

With respect to a positive electrode, a paste of the positive electrode composite was produced by adding dehydrated 1-methyl-2-pyrrolidone (hereinafter, also referred to as NMP) to a mixture obtained by mixing the positive electrode active material powder S1 obtained in Production Example 1, acetylene black as a conductive material, and PVDF as a binder so as to have a weight ratio of S1 : conductive material : binder = 85 : 10 : 5, and the mixture was kneaded, and the paste was applied to a positive electrode current collector made of an aluminum foil, and the paste was dried, and the resulting current collector was rolled.

A lithium foil with a thickness of 0.1 mm was used as a negative electrode.

As a solid electrolyte, the solid electrolyte powder E1 in Production Example 2 and polytetrafluoroethylene (hereinafter PTFE) as a binder were weighed at a weight ratio, of 98 : 2 and mixed to obtain an elastic body which is pressure molded to obtain a solid electrolyte (sheet-form).

A laminate sheet obtained using the above-mentioned positive electrode, negative electrode, and sheet-form solid electrolyte by sandwiching the sheet-form solid electrolyte between the positive electrode (the face coated with the positive composite) and the negative electrode (the face coated with the negative composite) is pressure formed to heighten the contact degree and housed in a battery can to produce a battery 1. With respect to the battery 1, the battery characteristic such as cycle property can be confirmed by the evaluation on the above-mentioned evaluation conditions.

### Example 2

The positive electrode active material powder S1 obtained in Production Example 1, acetylene black as a conductive material, PVDF as a binder, and the solid electrolyte powder E1 of Production Example 2 are weighed so as to have a weight ratio of S1 : conductive material : binder : E1 = 50 : 10 : 5 : 35, and mixed to obtain a mixture to which dehydrated NMP was added and kneaded to obtain a paste of the positive electrode composite and the paste is applied to a positive electrode current collector made of an aluminum foil, dried and rolled to obtain a positive electrode.

Those same as the negative electrode and solid electrolyte used in Example 1 are used and a battery 2 is produced in the same manner as Example 1. With respect to the battery 2, the battery characteristic such as cycle property can be confirmed by the evaluation on the above-mentioned evaluation conditions.

### Example 3

Spherical graphite as a negative electrode material, acetylene black as a conductive material, and PVDF as a binder are weighed so as to have a weight ratio of negative electrode material : conductive material : binder = 85 : 10 : 5 and mixed to obtain a mixture to which dehydrated NMP is added and kneaded to obtain a paste of the negative electrode composite and the paste is applied to a negative electrode current collector made of a copper foil, dried and rolled to obtain a negative electrode.

Those same as the positive electrode and solid electrolyte used in Example 1 are used and a battery 3 is produced in the same manner as Example 1. With respect to the battery 3, the battery characteristic such as cycle property can be confirmed by the evaluation on the above-mentioned evaluation conditions.

### Example 4

The positive electrode active material powder S1 obtained in Production Example 1, acetylene black as a conductive material, PVDF as a binder, and solid electrolyte powder E1 in Production Example 2 are weighed so as to have a weight ratio of S1 : conductive material : binder : E1 = 40 : 10 : 5 : 45 and mixed to obtain a mixture to which dehydrated is added and kneaded to obtain a paste of the positive electrode composite and the paste is applied to a positive electrode current collector made of an aluminum foil, dried and rolled to obtain a positive electrode.

Spherical graphite as a negative electrode material, acetylene black as a conductive material, PVDF as a binder, and solid electrolyte powder E1 in Production Example 2 are weighed so as to have a weight ratio of negative electrode material : conductive material : binder : E1 = 40 : 10 : 5 : 45 and mixed to obtain a mixture to which dehydrated NMP is added and kneaded to obtain a paste of the negative electrode composite and the paste was applied to a negative electrode current collector made of a copper foil, dried and rolled to obtain a negative electrode.

The above-mentioned positive electrode and negative electrode are used and the faces coated with the respective composites are layered to obtain a laminate sheet which was further rolled to heighten the contact degree and housed in a battery can to produce a battery 4. With respect to the battery 4, the battery characteristic such as cycle property can be confirmed by the evaluation on the above-mentioned evaluation conditions.

### Example 5

Spherical graphite as a negative electrode material, acetylene black as a conductive material, PVDF as a binder and solid electrolyte powder E1 in Production Example 2 are weighed so as to have a weight ratio of negative electrode material : conductive material. : binder : E1= 50 : 10 : 5 : 35 and mixed to obtain a mixture to which dehydrated NMP is added and kneaded to obtain a paste of the negative electrode composite and the paste is applied to a negative electrode current collector made of a copper foil, dried and rolled to obtain a negative electrode.

As the positive electrode, the same positive electrode as that of Example 2 and as a solid electrolyte, the same solid electrolyte as that of Example 1 are used and a battery 5 is produced in the same manner as Example 1. With respect to the battery 5, the battery characteristic such as cycle property can be confirmed by the evaluation on the above-mentioned evaluation conditions.

With respect to a lithium secondary battery of the present invention, the above-mentioned Examples 2, 4, and 5 are lithium secondary batteries respectively having the positive electrodes, the negative electrodes, and the solid electrolytes, in which the positive electrodes contain the positive electrode active material particles consisting of particles of materials capable of doping/dedoping lithium ion and the element M-containing compounds disposed on the surfaces of the particles as particles or in a layered state (herein, the element M-containing compounds are one or more compounds containing one or more elements selected from B, Al, Mg, Co, Cr, Mn and Fe, which are also compounds selected from oxides, hydroxides, oxyhydroxides, and carbonates) as well as solid electrolyte particles and therefore, the initial capacities of the batteries can be improved. Further, Examples 2 and 5, that is, lithium secondary batteries respectively having the positive electrodes, the negative electrodes, and the solid electrolytes, in which the positive electrodes contain the positive electrode active material particles made of particles of materials capable of doping/dedoping lithium ion and the element M-containing compounds disposed on the surfaces of the particles as particles or in a layered state (herein, the element M-containing compounds are one or more compounds containing one or more elements selected from B, Al, Mg, Co, Cr, Mn and Fe, which are also compounds selected from oxides, hydroxides, oxyhydroxides, and carbonates) as well as solid electrolyte particles, and furthermore the sheet-form solid electrolytes, therefore, the effect of the present invention can be further improved.

## Claims

1. A lithium secondary battery having a positive electrode, a negative electrode, and a solid electrolyte, wherein the positive electrode contains positive electrode active material particles comprising particles of a material capable of doping/dedoping lithium ion and an element M-containing compound (herein, the element M-containing compound is a compound containing one or more elements selected from B, Al, Mg, Co, Cr, Mn, and Fe as the element M) disposed on the surfaces of the particles as particles or in a layered state.

2. The lithium secondary battery according to claim 1, wherein the element M is Al.

3. The lithium secondary battery according to claim 1 or 2, wherein the material capable of doping/dedoping lithium ion is a composite oxide containing lithium and nickel.

4. The lithium secondary battery according to any one of claims 1 to 3, wherein the positive electrode further contains solid electrolyte particles.

5. The lithium secondary battery according to claim 4 further having a sheet-form solid electrolyte.
